# EUROPÄISCHE PATENTSCHRIFT

(11) **EP 2 848 791 B1**
(45) Veröffentlichungstag und Bekanntmachung des Hinweises auf die Patenterteilung: **09.08.2017**
(21) Anmeldenummer: 14001705.4
(22) Anmeldetag: 15.05.2014
(51) Int. Cl.: F02D 9/10, F02D 9/02, F16K 1/22, F16K 31/04

(54) **Vorichtung zur Ansteuerung einer Drosselklappe, insbesondere einer Drosselklappe einer Ansauganlage einer Brennkraftmaschine**
Device for actuating a throttle valve, in particular a throttle valve of an intake system of an internal combustion engine
Dispositif de commande d'une vanne papillon, en particulier d'une vanne papillon d'une installation d'aspiration d'un moteur à combustion interne

(30) Priorität: 13.09.2013 DE 102013015138
(43) Veröffentlichungstag der Anmeldung: 18.03.2015
(73) Patentinhaber: MAN Truck & Bus AG, 80995 München (DE)
(72) Erfinder: Kaufmann, Torsten, 91207 Lauf (DE); Boegershausen, Mathias, 91056 Erlangen (DE)
(74) Vertreter: Liebl, Thomas

(56) Entgegenhaltungen:
- WO-A1-2008/014044
- WO-A1-2009/148694
- WO-A1-2012/084796
- DE-A1- 2 802 038
- DE-A1-102011 107 088
- US-A1- 2008 115 494

## Beschreibung

Die Erfindung betrifft eine Vorrichtung zur Ansteuerung einer Drosselklappe, insbesondere einer Drosselklappe einer Ansauganlage einer Brennkraftmaschine, mittels eines Stellmotors gemäß dem Oberbegriff des Patentanspruchs 1 sowie eine Brennkraftmaschine nach Anspruch 14.

Zur Ansteuerung von Drosselklappen von Brennkraftmaschinen werden Stellmotoren verwendet, die mit der Welle der jeweiligen Drosselklappe drehmomentübertragend gekoppelt sind. Problematisch ist hierbei, dass der mit der Drosselklappe gesteuerte Medienstrom bei aufgeladenen Motoren bzw. Brennkraftmaschinen eine hohe Temperatur aufweist, während herkömmliche Stellmotoren aber nur eine geringe thermische Erwärmung tolerieren. Die Verwendung von Stellmotoren, die hohen thermischen Belastungen standhalten, wäre eine denkbare Maßnahme, um eine Lösung für dieses Problem zu erhalten. Spezielle Stellmotoren mit sehr hoher Wärmebelastbarkeit wären jedoch sehr aufwändig und würden daher auch einen entsprechend hohen Kostenaufwand erfordern.

Um mit herkömmlichen Stellmotoren Drosselklappen betätigen zu können, mit denen ein Medienstrom mit sehr hoher Temperatur gesteuert wird, könnten Maßnahmen zur thermischen Entkopplung zwischen Drosselklappe und Stellmotor ergriffen werden. Aus der DE 103 44 218 A1 ist eine thermische Entkopplung zwischen einem Stellmotor und einem Ventil bekannt. Hierzu wird ein als Kipphebel ausgebildetes Kopplungsglied aus einem Werkstoff verwendet, der eine schlechte Wärmeleitfähigkeit besitzt. Ein solcher Kipphebel ist jedoch zur Drehmomentübertragung zwischen der Welle eines Stellmotors und der Welle einer Drosselklappe nicht geeignet.

Der Erfindung liegt die Aufgabe zugrunde, eine Vorrichtung zur Ansteuerung einer Drosselklappe mittels eines Stellmotors zu schaffen, bei der zwischen der Drosselklappe und dem Stellmotor eine drehmomentübertragende Einrichtung zur thermischen Entkopplung wirksam ist. Ferner ist es eine weitere Aufgabe der vorliegenden Erfindung eine Brennkraftmaschine mit einer derartigen Vorrichtung bereitzustellen.

Die Lösung dieser Aufgabe erhält man mit den Merkmalen der unabhängigen Patentansprüche. Besonders vorteilhafte Weiterbildungen sind in den Unteransprüchen offenbart.

Gemäß Anspruch 1 wird eine Vorrichtung zur Ansteuerung einer Drosselklappe mittels eines Stellmotors vorgeschlagen, bei der wenigstens eine Einrichtung zur thermischen Entkopplung zwischen Drosselklappe und Stellmotor angeordnet ist. Erfindungsgemäß ist die Welle des Stellmotors über ein drehmomentübertragendes Koppelelement mit einer definiert geringen bzw. niedrigen Wärmeübertragungsfähigkeit mit der Welle der Drosselklappe gekoppelt. Je geringer die Wärmeübertragungsfähigkeit des Koppelelements ist, desto geringer kann der Abstand zwischen Stellmotor und Drosselklappe gewählt werden, wodurch sich eine entsprechende Platzersparnis ergibt.

Die mittelbare Kopplung der Welle des Stellmotors mit der Welle der Drosselklappe über ein drehmomentübertragendes Koppelelement mit definiert geringer Wärmeübertragungsfähigkeit kann auf unterschiedliche Weise erfolgen. So zum Beispiel dadurch, dass das Koppelelement eine geringere Wärmeübertragungsfähigkeit aufweist als die Welle des Stellmotors und/oder das Koppelelement eine geringere Wärmeübertragungsfähigkeit aufweist als die Welle der Drosselklappe. Auch kann das Koppelelement alternativ oder zusätzlich selbst wenigstens bereichsweise, insbesondere zumindest an den Kontaktstellen mit wenigstens einer der Wellen, aus einem Material mit einer geringen Wärmeübertragungsfähigkeit hergestellt sein. Alternativ oder zusätzlich kann die Kopplung des Kopplungselementes mit der Welle des Stellmotors und/oder mit der Welle der Drosselklappe geometrisch dergestalt ausgebildet sein, dass lediglich eine definiert geringe Wärmeübertragung zwischen den gekoppelten Bauteilen stattfindet, zum Beispielim Sinne einer Punkt- oder Linienberührung anstatt einer flächigen Auflage. Die Begrifflichkeit "Koppelelement mit definiert geringer Wärmeübertragungsfähigkeit" ist somit nicht nur einschränkend, zum Beispiel bezogen auf die Materialwahl, auszulegen und zu verstehen, sondern ausdrücklich in einem umfassenden Sinne zu verstehen, die zum Beispiel auch konstruktive Gestaltungen mit geringer Wärmeübertragungsfähigkeit einschließt. Zudem ist auch die Begrifflichkeit "geringe Wärmeübertragungsfähigkeit" in einem umfassenden Sinne zu verstehen und umfasst selbstverständlich, sofern technisch möglich, Ausgestaltungen, bei denen keine Wärmeübertragung stattfindet.

Die Wärmeübertragungsfähigkeit des Koppelelements kann durch entsprechende Materialauswahl und/oder durch eine entsprechende geometrische Gestaltung des Koppelelements erreicht werden. Bevorzugt wird das Koppelelement als Hülse ausgebildet, in die die Welle der Drosselklappe in der Weise formschlüssig eingreift, dass die Welle der Drosselklappe eine Winkelabweichung von der axialen Ausrichtung der Welle des Stellmotors haben kann, wie dies beispielsweise bei einem Kardangelenk der Fall ist. Durch diese Maßnahme wird die Montage erleichtert, da die beiden Wellen von Drosselklappe und Stellmotor nicht exakt axial ausgerichtet sein müssen.

Zur thermischen Entkopplung zwischen Drosselklappe und Stellmotor kann vorgesehen sein, dass der Stellmotor an einer Halterung, insbesondere an einer wenigstens einseitig offenen Halterung, im Abstand von der Drosselklappe befestigt ist. Das Koppelelement liegt dann bevorzugt im Bereich der offenen Halterung ein. Besonders bevorzugt ist die Haltung dreiseitig offen, sodass vom darin einliegenden Koppelelement eine optimale Ableitung von Wärme an die Umgebungsluft stattfinden kann. Auch die Haltung selbst kann durch ihre offene Gestaltung in optimaler Weise Wärme an die Umgebungsluft abgeben, sodass insgesamt eine möglichst geringe Wärmeübertragung von dem Gehäuse und der Welle der Drosselklappe zum Stellmotor auftritt.

Die Haltung besteht aus zwei miteinander verschraubten Haltewinkeln, die gemeinsam einen im Wesentlichen U-förmigen Motorträger bilden. Einer der beiden Schenkel des U-förmigen Motorträgers ist an dem Gehäuse der Drosselklappe festgelegt, während der andere Schenkel mit dem Stellmotor verbunden, insbesondere verschraubt ist. Der Abstand der beiden Schenkel ist verstellbar, um eine einfache Anpassung an unterschiedliche Einbausituationen zu ermöglichen. Eine aus zwei Haltewinkeln bestehende Halterung ist nicht nur sehr einfach und damit kostengünstig herzustellen, sondern besitzt drei offene Seiten, die eine optimale Wärmeableitung im Zwischenraum zwischen Drosselklappe und Stellmotor ermöglichen.

Gemäß einer diesbezüglich alternativen Ausführungsform wird vorgeschlagen, dass die Halterung ein Halteelement, insbesondere eine Trägerplatte als Halteelement, aufweist, an der der Stellmotor festgelegt ist und die über wenigstens eine Distanzhülse mit dem Gehäuse der Drosselklappe im verbunden ist, insbesondere mittels mehrerer Befestigungsschrauben verschraubt ist, so dass das Halteelement bzw. eine das Halteelement ausbildende Trägerplatte beabstandet von dem Gehäuse der Drosselklappe liegt und lediglich über die Distanzhülsen bzw. die Schrauben eine geringe Wärmeleitung erfolgen kann, insgesamt jedoch ein offener Aufnahmeraum für das Klemmelement entsteht, der eine sehr gute Wärmeabgabe vom Klemmelement an die Umgebungsluft gewährleistet. Besonders bevorzugt ist in diesem Zusammenhang eine Ausgestaltung, bei der das Halteelement durch eine rechteckförmigen Trägerplatte gebildet ist, in deren Eckbereichen jeweils die Distanzhülsen angeordnet sind. Ein derartiger Aufbau mit mehreren eckbereichseitig angeordneten Distanzhülsen ist insgesamt relativ stabil, insbesondere auch im Hinblick auf die in diesem Bereich auftretenden Eigenfrequenzen.

Weiter ist es besonders vorteilhaft, das dem Stellmotor zugewandte Element (zum Beispielein Schenkel eines Haltewinkels oder eine Halte- bzw. Trägerplatte) der Halterung mit solchen Befestigungslanglöchern zu versehen, die zur Befestigung von Stellmotoren mit unterschiedlich großen Anschlussflanschen geeignet sind. Damit ist es möglich, eine Ausführung einer Halterung für unterschiedliche Motorgrößen zu verwenden.

Das zwischen den beiden Wellen von Drosselklappe und Stellmotor eingesetzte Koppelelement kann zur Bereitstellung der definiert geringen Wärmeübertragungsfähigkeit wenigstens bereichs- bzw. teilweise aus Keramik und/oder Kunststoff bzw. jedem anderen Material mit einer definiert geringen Wärmeleitfähigkeit bestehen.

Eine definiert geringe Wärmeübertragung zwischen den beiden Wellen kann zudem auch dadurch erreicht werden, dass die drehmomentübertragende Kopplung über linienförmige oder punktförmige Berührungsflächen im Bereich des Koppelelements erfolgt. Über derart kleine Berührungsflächen ist nur eine sehr geringe Wärmeübertragung in dem sich berührenden Material möglich.

Auch bei einer Ausführung des Koppelelements als Kardangelenk wird erreicht, dass verhältnismäßig kleine Berührungsflächen innerhalb des Koppelelements erforderlich sind, um eine Drehmomentübertragung zwischen den beiden Wellen zu realisieren.

Wird das Koppelelement gemäß einer vorteilhaften Weiterbildung der Erfindung als Gestänge ausgebildet, welches zwischen den beiden Wellen wirksam ist, kann alleine aufgrund der Gestängelänge und der damit verbundenen Wärmeabstrahlung an die Umgebung eine Wärmeübertragung zwischen den beiden Wellen, gegenüber einer direkten Kopplung, deutlich reduziert werden.

Ist das Koppelelement eine Hülse, so kann diese besonders vorteilhaft mit der Welle des Stellmotors oder mit der Welle der Drosselklappe formschlüssig verbunden sein, während das andere Ende der Hülse mit der jeweils anderen Welle kraftschlüssig verbunden ist. Bei der bevorzugten Ausführungsform ist die Hülse mit der Welle des Stellmotors mittels einer Klemmverbindung kraftschlüssig verbunden. Die Formschlussverbindung an der Welle der Drosselklappe ist dann vorzugsweise so ausgebildet, dass eine Drehmomentübertragung über die Formschlussverbindung möglich ist und das Koppelelement in axialer Richtung von der Welle der Drosselklappe abziehbar ist. Damit kann der Stellmotor zusammen mit dem Koppelelement von der Welle der Drosselklappe abgezogen und auch wieder aufgesetzt werden, was einen entsprechend geringen Montageaufwand ergibt.

Die Hülse besitzt vorzugsweise einen geschlitzten und dadurch radial beweglichen Klemmbereich der Mittels einer Klemmschraube an einer einliegenden Welle festgeklemmt und auch wieder gelöst werden kann.

Das als Hülse ausgebildete Koppelelement besitzt vorzugsweise an der Seite, an der diese formschlüssig mit einer der beiden Wellen verbunden ist, eine Aufnahmeöffnung für die jeweilige Welle, wobei die Aufnahmeöffnung einen deutlich größeren Durchmesser hat als die darin eingeführte Welle. Damit ergibt sich eine entsprechende Montagetoleranz, sodass die in die Hülse formschlüssig eingreifende Welle bezüglich ihres Ausrichtungswinkels nicht exakt zur jeweils anderen Welle ausgerichtet sein muss. Die Formschlussverbindung kann dabei auf sehr einfache Weise mittels eines an der entsprechenden Welle vorgesehenen Querstifts und einem korrespondierenden Längsschlitz an der Hülse realisiert werden. Bevorzugt greift der Querstift in gegenüberliegende Längsschlitze oder in gegenüberliegende Längsnuten an der Hülse ein.

Damit der Stellmotor zusammen mit einem auf seiner Welle montierten Koppelelement problemlos von der Welle der Drosselklappe abgezogen werden kann, kann an der Haltung, die den Stellmotor trägt, eine entsprechende Durchlassöffnung für die Welle des Stellmotors vorgesehen sein, deren Öffnungsdurchmesser so bemessen ist, dass das Koppelelement durch die Durchlassöffnung hindurchführbar ist.

Die erfindungsgemäße Vorrichtung findet vorzugsweise bei Brennkraftmaschinen Verwendung, die in Kraftfahrzeugen, zum Beispiel Nutzfahrzeugen, oder als Stationärmotor eingesetzt werden, und hier bevorzugt im Bereich der Ansauganlage. Die Brennkraftmaschinen können neben herkömmlichen Kraftstoff-Verbrennungsmaschinen auch Gasmotoren oder dergleichen Motoren sein.

Besonders bevorzugt ist hierbei der Einsatz der Drosselklappe mitsamt der erfindungsgemäßen Vorrichtung bei einem Aufbau, bei dem die Drosselklappe stromab eines Verdichters eines Abgasturboladers der Brennkraftmaschine und stromauf eines Ladeluftkühlers der Ansauganlage und damit zwischen einem Verdichter und dem Ladeluftkühler angeordnet ist, weil bei einer derartigen Anordnung nach der Verdichtung sehr hohe Temperaturen auftreten können, zum BeispielTemperaturen von über 200°C auftreten können.

Die Erfindung wird nachfolgend anhand von in der Zeichnung dargestellten Ausführungsbeispielen näher erläutert.

Es zeigen:
- Fig. 1: eine vereinfacht dargestellte Vorrichtung zur Ansteuerung einer Drosselklappe,
- Fig. 2: eine Ansicht der Vorrichtung von Figur 1, jedoch um 90° gegenüber Figur 1 gedreht,
- Fig. 3: eine perspektivische Ansicht eines Koppelements, wie es bei der Vorrichtung von Figur 1 und Figur 2 eingesetzt ist,
- Fig. 4: die rückseitige Ansicht des Koppelelements von Figur 3,
- Fig. 5: die Draufsicht auf einen Schenkel eines u-förmigen Motorträgers zur Befestigung eines Stellmotors,
- Fig. 6a: eine nicht zur Erfindung gehörende Vorrichtung zur Ansteuerung einer Drosselklappe, bei der die Halterung für den Stellmotor über Distanzhülsen am Gehäuse der Drosselklappe befestigt ist,
- Fig. 6b: eine beispielhafte Ausführungsform der in der Fig. 6a gezeigten Variante in perspektivischer Darstellung, und
- Fig. 7: das Prinzip einer Kopplung zwischen Stellmotor und Drosselklappe mittels eines Gestänges.

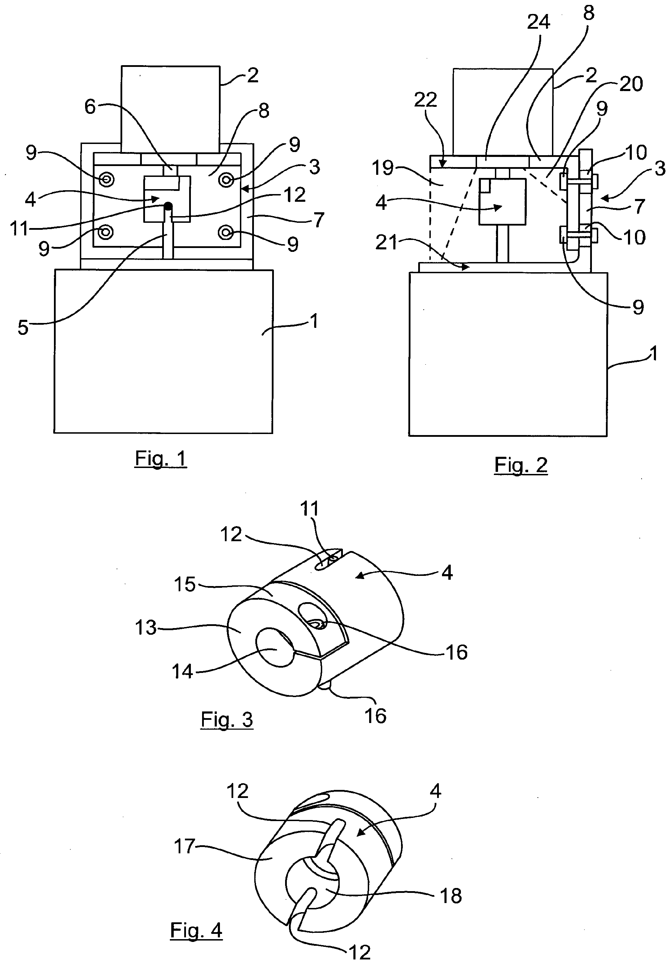

Figur 1 zeigt vereinfacht eine als Funktionsblock dargestellte Drosselklappe 1, einen Stellmotor 2, eine Halterung 3 sowie ein Koppelelement 4, welches die beiden Wellen 5, 6 der Drosselklappe 1 und des Stellmotors 2 drehmomentübertragend koppelt.

Die Halterung 3 ist im Wesentlichen U-förmig ausgebildet und besteht aus zwei Haltewinkeln 7, 8, die mittels Schrauben 9 miteinander verschraubt sind. In der um 90° gedrehten Ansicht von Figur 2 ist ersichtlich, dass der Haltewinkel 7 vertikal ausgerichtete Langlöcher 10 hat, wodurch der Haltewinkel 8 gegenüber dem Haltewinkel 7 in der Höhe verstellbar ist.

In Figur 1 und Figur 2 ist zur Kopplung der beiden Wellen 5, 6 ein als Hülse ausgebildetes Koppelelement 4 vorgesehen, welches auf der Welle 6 des Stellmotors 2 festgeschraubt beziehungsweise festgeklemmt ist. Die Welle 5 greift dagegen mit einem Querstift 11 in einen Längsschlitz 12 des Klemmelements 4 ein. Der Querstift 11 bildet somit in Verbindung mit dem Längsschlitz 12 eine formschlüssige Verbindung, über die ein Drehmoment vom Koppelelement 4 auf die Welle 5 der Drosselklappe 1 übertragen werden kann.

Das Koppelelement 4 ist in Figur 3 und Figur 4 detaillierter dargestellt, wobei in Figur 3 auch der in den Längsschlitz 12 eingreifende Querstift 11 der Welle 5 angedeutet ist. Auf der der Welle 6 der Drosselklappe 1 zugewandten Seite 13 hat das Klemmelement 4 eine im Durchmesser an die Welle 6 angepasste Aufnahmeöffnung 14. Ein geschlitzter Klemmbereich 15 des Klemmelements 4 kann mittels einer Klemmschraube 16 mit der in die Aufnahmeöffnung 14 eingesetzten Welle 6 der Drosselklappe 2 (Figur 1) verklemmt werden, um eine kraftschlüssige Verbindung zwischen dem Klemmelement 4 und der Welle 6 herzustellen.

In der Ansicht von Figur 4 ist die Seite 17 des Klemmelements 4 im Vordergrund ersichtlich, die der Welle 5 der Drosselklappe 1 zugewandt ist. Das als Hülse ausgebildete Klemmelement 4 besitzt gegenüberliegende Längsschlitze 12, in die die Welle 5 der Drosselklappe 1 mit beidseitig an der Welle abstehenden Querstiften 11 (Figur 1) formschlüssig eingreifen kann. Zur Aufnahme der Welle 5 der Drosselklappe 1 besitzt das Klemmelement 4 eine Aufnahmeöffnung 18, die einen deutlich größeren Durchmesser hat als der Durchmesser der einzuführenden Welle 5. Dadurch wird erreicht, dass für die Welle 5 der Drosselklappe 1 nicht nur aufgrund der Längsschlitze 12 eine axiale Montagetoleranz zulässig ist, sondern auch eine geringe Winkelabweichung zur Ausrichtung der Welle 6 des Stellmotors 2 möglich ist.

Das Koppelelement 4 kann aus einem Material gefertigt sein, welches eine definiert geringe Wärmeleitfähigkeit besitzt. Das Koppelelement 4 kann aber auch nur teilweise aus einem Material geringer Wärmeleitfähigkeit bestehen, beispielsweise im Klemmbereich der Aufnahmebohrung 14 (Figur 3). Als Material mit geringer Wärmeleitfähigkeit kann beispielsweise Keramik oder Kunststoff verwendet werden.

Um eine geringe Wärmeübertragung zwischen dem Hochtemperaturbereich der Drosselklappe und dem temperaturempfindlichen Stellmotor zu erreichen, ist gemäß Figur 1 und Figur 2 eine U-förmige Halterung 3 vorgesehen, die an drei Seiten offen ist. Dadurch kann vom darin einliegenden Koppelelement 4 Wärme an die Umgebungsluft abgegeben werden. Außerdem trägt die U-förmig ausgebildete Halterung selbst auch dazu bei, dass zwischen der Drosselklappe 1 und dem Stellmotor 2 möglichst wenig Wärme über das Material der Halterung übertragen wird. Die offene Ausführung der Halterung 3 bewirkt nämlich auch, dass die Halterung 3 selbst Wärme an die Umgebung abgeben kann und somit am Stellmotor 2 nur eine geringe Wärmebelastung auftritt.

Die beiden Haltewinkel 7, 8 können jeweils zur Erhöhung der Stabilität der gesamten Halterung 3 mit zusätzlichen schmalen, hier mit unterbrochenen Linien eingezeichneten Seitenwinkeln 19, 20 versehen sein, die jedoch den Raum, in welchem das Koppelelement 4 einliegt, seitlich nicht vollständig abschließen sollten, um die Wärmeabfuhr an die Umgebungsluft nicht unnötig zu beeinträchtigen.

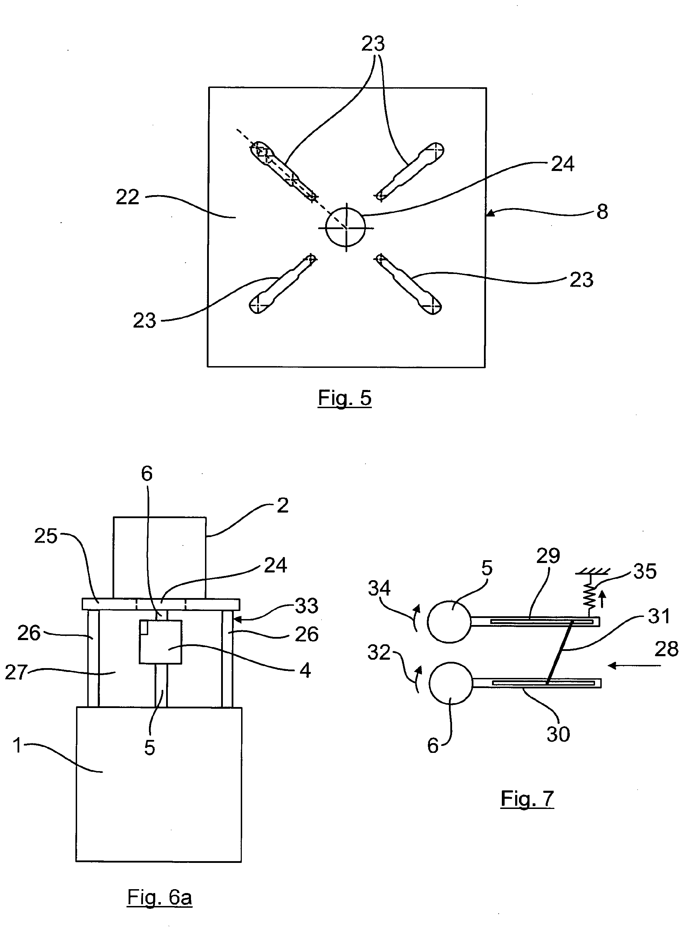

Die Haltewinkel 7, 8 sind jeweils an einem Schenkel miteinander verschraubt, während die anderen Schenkel 21, 22 mit der Drosselklappe 1 und mit dem Stellmotor 2 verschraubt sind. Diese Schenkel 21, 22 können eine Anordnung von Befestigungslöchern haben, wie dies in Figur 5 für den Schenkel 22 des Haltewinkels 8 dargestellt ist. In Figur 5 sind die Befestigungslöcher 23 im Wesentlichen entlang der Diagonalen des Schenkels 22 ausgerichtet und sind als Langlöcher ausgebildet, deren Lochbreite mit zunehmendem radialen Abstand von einer mittigen Durchlassöffnung 24 in ihrer Breite zunehmen. Somit ist der Schenkel 22 zur Befestigung von Stellmotoren mit unterschiedlich großem Anschlussflansch geeignet, sofern die Befestigungspunkte des jeweiligen Stellmotors entsprechend positioniert sind.

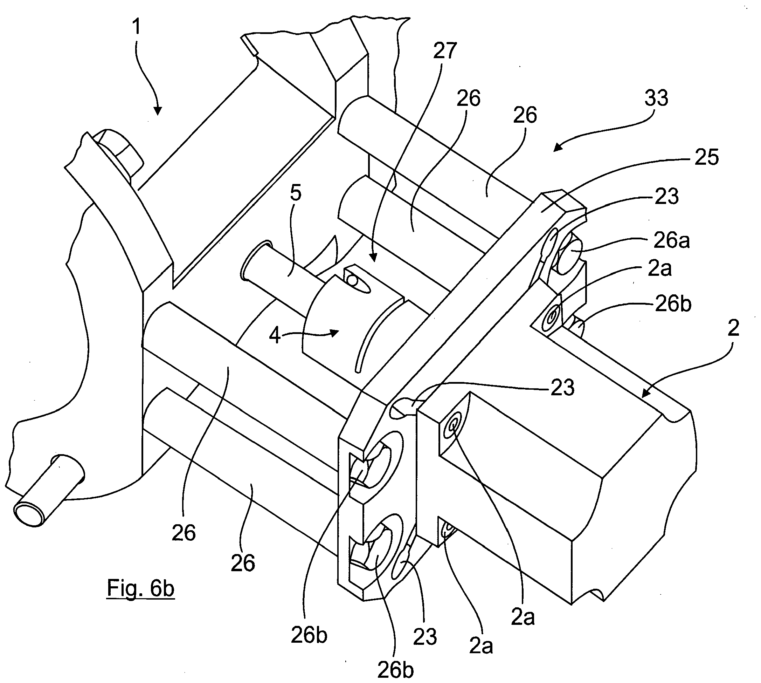

In Figur 5 ist die Durchlassöffnung 24 verhältnismäßig klein ausgebildet, so dass durch diese Öffnung im Wesentlichen die Welle 6 des in Figur 1 und Figur 2 dargestellten Stellmotors 2 hindurchführbar ist. Die Durchlassöffnung 24 kann aber auch wie in Figur 1 und Figur 2 und auch in Figur 6 ersichtlich, so groß gewählt werden, dass das Klemmelement 4 durch die Durchlassöffnung 24 zu Montagezwecken hindurchgeführt werden kann.

Figur 6 zeigt eine nicht zur Erfindung gehörende Variante einer Halterung 33 zur Befestigung des Stellmotors 2 im Bereich der Drosselklappe 1, wobei Figur 6a eine schematische Prinzipskizze und Figur 6b eine perspektivische Darstellung einer diesbezüglich beispielhaften Ausführungsform zeigt. Die hier dargestellte Halterung 33 besitzt eine Trägerplatte 25, die über Distanzhülsen 26 bzw. durch diese hindurch mit dem Gehäuse der Drosselklappe 1 verschraubt ist, (Schrauben 26a in Figur 6b). Bei einer rechteckförmigen bzw. quadratischen Trägerplatte 25 können, wie in der Figur 6b schematisch dargestellt, jeweils in den Eckbereichen Distanzhülsen 26 angeordnet sein, so dass insgesamt ein offener Aufnahmeraum 27 für das Klemmelement 4 entsteht, der eine sehr gute Wärmeabgabe vom Klemmelement 4 an die Umgebungsluft gewährleistet. Außerdem erfolgt nur eine geringe Wärmeleitung über die Distanzhülsen 26 zur Trägerplatte 25 und damit zum Stellmotor 2. Ein derartiger Aufbau mit mehreren eckbereichseitig angeordneten Distanzhülsen 26 ist insgesamt relativ stabil, insbesondere auch im Hinblick auf die in diesem Bereich auftretenden Eigenfrequenzen.

Wie dies der Figur 6b weiter sehr gut entnommen werden kann, bildet die Trägerplatte 25 hier - analog zum Haltewinkel 8 der vorherigen Ausführungsform - ein Halteelement der Halterung 33 aus, bei dem die Befestigungslöcher 23 für die darin eingreifenden Befestigungsschrauben 2a wiederum langlochartig bzw. schlitzförmig ausgebildet sind.

Figur 7 zeigt anstelle eines hülsenförmigen Kopplungselements eine Kopplung zwischen den beiden hier versetzt untereinander angeordneten Wellen 5, 6 über ein Gestänge 28, welches aus zwei Betätigungsstangen 29, 30 und einer Koppelstange 31 besteht. Die Welle 6 stellt hier wieder die Antriebswelle des Stellmotors 2 dar, die bei einer Drehbewegung gemäß Pfeilrichtung 32 über das Gestänge 28 eine Drehung der Welle 5 der Drosselklappe in Pfeilrichtung 34 bewirkt. Ein Federelement 35, welches an der Betätigungsstange 29 der Welle 5 als Zugfeder angreift, übt auf die Welle 5 über die Betätigungsstange 29 eine Rückstellkraft aus, wenn der Stellmotor 2 seine Welle 6 entsprechend der Pfeilrichtung 32 dreht.

Das Gestänge 28 kann aus einem Material mit geringer Wärmeleitfähigkeit bestehen. Selbst bei einer metallischen Ausführung des Gestänges 28 ergibt sich eine Ausführung eines Koppelelements, welches nur eine sehr geringe Wärmeübertragung über die miteinander mechanisch gekoppelten Teile zulässt.

## Patentansprüche

1. Vorrichtung zur Ansteuerung einer Drosselklappe (1), insbesondere einer in einer Ansauganlage einer Brennkraftmaschine angeordneten Drosselklappe, mittels eines Stellmotors (2), bei der wenigstens eine Einrichtung zur thermischen Entkopplung zwischen Drosselklappe (1) und Stellmotor (2) angeordnet ist, wobei die Welle (6) des Stellmotors (2) über ein drehmomentübertragendes Koppelelement (4) mit der Welle (5) der Drosselklappe (1) gekoppelt ist, wobei das Koppelelement (4) eine definiert geringe Wärmeübertragungsfähigkeit aufweist, wobei der Stellmotor (2) an einer Halterung (3) im Abstand von der Drosselklappe (1) befestigt ist **dadurch gekennzeichnet, dass** die Halterung (3) aus zwei miteinander verschraubten Haltewinkeln (7, 8) einen im Wesentlichen U-förmigen Motorträger bildet, der mit einem Schenkel (21) mit der Drosselklappe (1) und mit einem anderen Schenkel (22) mit dem Stellmotor (2) verbunden ist, und dass der Abstand der beiden Schenkel (21, 22) innerhalb definiert vorgebbarer Einstellbereiche verstellbar ist.

2. Vorrichtung nach Anspruch 1, **dadurch gekennzeichnet, dass** das Koppelelement (4) eine geringere Wärmeübertragungsfähigkeit aufweist als die Welle (6) des Stellmotors (2) und/oder als die Welle (5) der Drosselklappe (1).

3. Vorrichtung nach Anspruch 1 oder 2, **dadurch gekennzeichnet, dass** die Halterung (3; 33) wenigstens einseitig offen ausgebildet ist, insbesondere das Koppelelement (4) in der offenen Halterung (3) einliegt.

4. Vorrichtung nach einem der vorhergehenden Ansprüche, **dadurch gekennzeichnet, dass** der U-förmige Motorträger mit einem Schenkel (21) mit der Drosselklappe (1) und mit einem anderen Schenkel (22) mit dem Stellmotor (2) verschraubt ist.

5. Vorrichtung nach einem der vorhergehenden Ansprüche, **dadurch gekennzeichnet, dass** die Halterung (3), insbesondere ein Bestandteil der Halterung (3) bildendes Halteelement, an der dem Stellmotor (2) zugewandten Seite Befestigungslöcher (23) aufweist, die zur Befestigung von Stellmotoren (2) mit jeweils unterschiedlich großen Anschlussflanschen ausgebildet sind, insbesondere langlochartige Befestigungslöcher (23) aufweist.

6. Vorrichtung nach einem der vorhergehenden Ansprüche, **dadurch gekennzeichnet, dass** das Koppelelement (4) wenigstens teilweise aus Keramik und/oder Kunststoff oder einem anderen Material mit geringer Wärmeleitfähigkeit besteht.

7. Vorrichtung nach einem der vorhergehenden Ansprüche, **dadurch gekennzeichnet, dass** das Koppelelement (4) über linienförmige oder punktförmige Berührungsflächen mit der Welle (5) der Drosselklappe (1) und/oder der Welle (6) des Stellmotors (2) gekoppelt ist.

8. Vorrichtung nach einem der vorhergehenden Ansprüche, **dadurch gekennzeichnet, dass** das Koppelelement (4) als Kardangelenk ausgebildet ist.

9. Vorrichtung nach einem der Ansprüche 1 bis 7, **dadurch gekennzeichnet, dass** das Koppelelement (4) als Gestänge (28) zwischen den Wellen (5, 6) der Drosselklappe (1) und des Stellmotors (2) ausgebildet ist.

10. Vorrichtung nach einem der Ansprüche 1 bis 7, **dadurch gekennzeichnet, dass** das Koppelelement (4) eine Hülse ist, die einseitig mit der Welle (6) des Stellmotors (2) oder mit der Welle (5) der Drosselklappe (1) formschlüssig verbunden ist, und dass die Hülse mit der jeweils anderen Welle (5, 6) kraftschlüssig verbunden ist.

11. Vorrichtung nach Anspruch 10, **dadurch gekennzeichnet, dass** das hülsenförmige Koppelelement (4) einen geschlitzten und dadurch radial verstellbaren Klemmbereich (15) aufweist, insbesondere einen mittels einer Klemmschraube (16) verspannbaren Klemmbereich (15).

12. Vorrichtung nach einem der Ansprüche 10 oder 11, **dadurch gekennzeichnet, dass** das als Hülse ausgebildete Koppelelement (4) an der Seite, an der sie formschlüssig mit einer der beiden Wellen (5, 6) verbunden ist, eine Aufnahmeöffnung (18) für die Welle (5) aufweist, wobei die Aufnahmeöffnung (18) einen größeren Durchmesser als die darin eingeführte Welle (5) aufweist, und wobei die Welle (5) mittels wenigstens eines Stifts, insbesondere Querstifts (11), in einen Längsschlitz (12) oder eine Längsnut an dem hülsenförmigen Aufnahmeelement (4) formschlüssig eingreift.

13. Vorrichtung nach einem der vorhergehenden Ansprüche, **dadurch gekennzeichnet, dass** die Halterung (3) eine Durchlassöffnung (24) für die Welle (6) des Stellmotors (2) aufweist, deren Öffnungsdurchmesser so bemessen ist, dass das Koppelelement (4) durch die Durchlassöffnung (24) hindurchführbar ist.

14. Brennkraftmaschine, insbesondere für ein Kraftfahrzeug, insbesondere für Nutzfahrzeug, oder als Stationärmotor, mit einer von einem heißen Medienstrom durchströmten Ansauganlage, wobei in oder an der Ansauganlage, insbesondere an einem einen heißen Medienstrom führenden Ansaugrohr der Ansauganlage, eine Vorrichtung nach einem der vorhergehenden Ansprüche angeordnet ist.

15. Brennkraftmaschine nach Anspruch 14, **dadurch gekennzeichnet, dass** die Drosselklappe (1) stromab eines Verdichters eines Abgasturboladers der Brennkraftmaschine und stromauf eines Ladeluftkühlers der Ansauganlage angeordnet ist.

## Claims

1. Apparatus for actuating a throttle valve (1), in particular a throttle valve arranged in an intake system of an internal combustion engine, by means of an actuator (2), in which at least one device for thermal decoupling is arranged between the throttle valve (1) and actuator (2), wherein the shaft (6) of the actuator (2) is coupled to the shaft (5) of the throttle valve (1) via a torque-transmitting coupling element (4), wherein the coupling element (4) has a specifically low heat transmission capacity, wherein the actuator (2) is fastened to a mount (3) at a distance from the throttle valve (1), **characterized in that** the mount (3) forms a substantially U-shaped motor support made of two screwed-together angle brackets (7, 8), said motor support being connected to the throttle valve (1) with one leg (21) and to the actuator (2) with the other leg (22), and **in that** the distance between the two legs (21, 22) is adjustable within specifically predefinable setting ranges.

2. Apparatus according to Claim 1, **characterized in that** the coupling element (4) has a lower heat transmission capacity than the shaft (6) of the actuator (2) and/or than the shaft (5) of the throttle valve (1).

3. Apparatus according to Claim 1 or 2, **characterized in that** the mount (3; 33) is formed in an open manner at least on one side, and in particular the coupling element (4) rests in the open mount (3).

4. Apparatus according to one of the preceding claims, **characterized in that** the U-shaped motor support is screwed to the throttle valve (1) with one leg (21) and to the actuator (2) with the other leg (22).

5. Apparatus according to one of the preceding claims, **characterized in that** the mount (3), in particular a holding element that forms a constituent of the mount (3), has fastening holes (23) on the side facing the actuator (2) which are configured for fastening actuators (2) with connection flanges of different sizes in each case, in particular slot-like fastening holes (23).

6. Apparatus according to one of the preceding claims, **characterized in that** the coupling element (4) consists at least partially of ceramic and/or plastics material or of some other material with low thermal conductivity.

7. Apparatus according to one of the preceding claims, **characterized in that** the coupling element (4) is coupled to the shaft (5) of the throttle valve (1) and/or to the shaft (6) of the actuator (2) via linear or punctiform contact surfaces.

8. Apparatus according to one of the preceding claims, **characterized in that** the coupling element (4) is configured as a universal joint.

9. Apparatus according to one of Claims 1 to 7, **characterized in that** the coupling element (4) is configured as a linkage (28) between the shaft (5, 6) of the throttle valve (1) and of the actuator (2).

10. Apparatus according to one of Claims 1 to 7, **characterized in that** the coupling element (4) is a sleeve which is connected in a form-fitting manner on one side to the shaft (6) of the actuator (2) or to the shaft (5) of the throttle valve (1), and **in that** the sleeve is connected in a force-fitting manner to the other shaft (5, 6) in each case.

11. Apparatus according to Claim 10, **characterized in that** the sleeve-like coupling element (4) has a slotted and thus radially adjustable clamping region (15), in particular a clamping region (15) that is able to be braced by means of a clamping screw (16).

12. Apparatus according to either of Claims 10 and 11, **characterized in that** the coupling element (4) configured as a sleeve has, on the side on which it is connected in a form-fitting manner to one of the two shafts (5, 6), a receiving opening (18) for the shaft (5), wherein the receiving opening (18) has a larger diameter than the shaft (5) introduced into it, and wherein the shaft (5) engages in a form-fitting manner in a longitudinal slot (12) or a longitudinal groove in the sleeve-like receiving element (4) by means of at least one pin, in particular transverse pin (11).

13. Apparatus according to one of the preceding claims, **characterized in that** the mount (3) has a passage opening (24) for the shaft (6) of the actuator (2), the opening diameter of which is dimensioned such that the coupling element (4) is able to be passed through the passage opening (24).

14. Internal combustion engine, in particular for a motor vehicle, in particular for a commercial vehicle, or in the form of a stationary engine, having an intake system through which a hot media flow flows, wherein an apparatus according to one of the preceding claims is arranged in or on the intake system, in particular on an intake pipe, conducting a hot media flow, of the intake system.

15. Internal combustion engine according to Claim 14, **characterized in that** the throttle valve (1) is arranged downstream of a compressor of an exhaust gas turbocharger of the internal combustion engine and upstream of a charge air cooler of the intake system.

## Revendications

1. Dispositif de commande d'une vanne papillon (1), notamment d'une vanne papillon disposée dans une installation d'aspiration de moteur à combustion interne, à l'aide d'un servomoteur (2), dans lequel au moins un dispositif de découplage thermique est disposé entre la vanne papillon (1) et le servomoteur (2), l'arbre (6) du servomoteur (2) étant couplé à l'arbre (5) de la vanne papillon (1) via un élément de couplage (4) transmettant un couple de rotation, l'élément de couplage (4) présentant une capacité de transmission de chaleur réduite de façon définie, le servomoteur (2) étant fixé à une fixation (3) à une certaine distance de la vanne papillon (1), **caractérisé en ce que** la fixation (3) forme, à partir de deux angles de maintien (7, 8) vissés entre eux, un support de moteur pour l'essentiel en forme de U relié, avec un côté (21), à la vanne papillon (1) et, avec un autre côté (22), au servomoteur (2) et que la distance des deux côtés (21, 22) peut être réglée à l'intérieur de zones de réglage prédéfinissables de façon définie.

2. Dispositif selon la revendication 1, **caractérisé en ce que** l'élément de couplage (4) présente une capacité de transmission de chaleur davantage réduite que l'arbre (6) du servomoteur (2) et/ou que l'arbre (5) de la vanne papillon (1).

3. Dispositif selon la revendication 1 ou 2, **caractérisé en ce que** le support (3 ; 33) est réalisé de façon ouverte au moins unilatéralement, notamment que l'élément de couplage (4) repose dans la fixation (3) ouverte.

4. Dispositif selon l'une quelconque des revendications précédentes, **caractérisé en ce que** le support de moteur en forme de U est vissé, avec un côté (21), à la vanne papillon (1) et, avec un autre côté (22), au servomoteur (2).

5. Dispositif selon l'une quelconque des revendications précédentes, **caractérisé en ce que** la fixation (3), notamment un élément de maintien faisant partie de la fixation (3), comporte des trous de fixation (23) au niveau du côté orienté vers le servomoteur (2), ces trous étant respectivement réalisés pour fixer les servomoteurs (2) à des flasques de raccordement de taille différente et étant notamment des trous de fixation (23) de type trou oblong.

6. Dispositif selon l'une quelconque des revendications précédentes, **caractérisé en ce que** l'élément de couplage (4) se compose au moins en partie de céramique et/ou de matière plastique ou d'une autre matière à conductivité thermique réduite.

7. Dispositif selon l'une quelconque des revendications précédentes, **caractérisé en ce que** l'élément de couplage (4) est couplé à l'arbre (5) de la vanne papillon (1) et/ou à l'arbre (6) du servomoteur (2) via des surfaces de contact en forme de ligne ou en forme de point.

8. Dispositif selon l'une quelconque des revendications précédentes, **caractérisé en ce que** l'élément de couplage (4) est réalisé sous la forme d'une articulation à cardan.

9. Dispositif selon l'une quelconque des revendications 1 à 7, **caractérisé en ce que** l'élément de couplage (4) est réalisé sous la forme d'une tige (28) entre les arbres (5, 6) de la vanne papillon (1) et le servomoteur (2).

10. Dispositif selon l'une quelconque des revendications 1 à 7, **caractérisé en ce que** l'élément de couplage (4) est une douille reliée unilatéralement par complémentarité de formes à l'arbre (6) du servomoteur (2) ou à l'arbre (5) de la vanne papillon (1) et que la douille est respectivement reliée par complémentarité de forces à l'autre arbre (5, 6).

11. Dispositif selon la revendication 10, **caractérisé en ce que** l'élément de couplage (4) en forme de douille comporte une zone de serrage (15) fendue et ainsi déplaçable dans le plan radial, notamment une zone de serrage (15) pouvant être serrée au moyen d'une vis de serrage (16).

12. Dispositif selon l'une quelconque des revendications 10 ou 11, **caractérisé en ce que** l'élément de couplage (4) réalisé sous la forme d'une douille comportant au niveau du côté au niveau duquel elle est reliée par complémentarité de formes à un des deux arbres (5, 6), une ouverture de logement (18) pour l'arbre (5), l'ouverture de logement (18) comportant un plus grand diamètre que l'arbre (5) introduit dedans et l'arbre (5) s'imbriquant par complémentarité de formes à l'aide d'au moins un pointeau, notamment un pointeau transversal (11), dans une fente longitudinale (12) ou une rainure longitudinale au niveau de l'élément de logement (4) en forme de douille.

13. Dispositif selon l'une quelconque des revendications précédentes, **caractérisé en ce que** la fixation (3) comporte une ouverture de passage (24) pour l'arbre (6) du servomoteur (2) dont le diamètre d'ouverture est dimensionné de telle sorte que l'élément de couplage (4) peut être traversé par l'ouverture de passage (24).

14. Moteur à combustion interne, notamment pour un véhicule automobile, notamment pour un véhicule utilitaire ou sous la forme d'un moteur stationnaire, avec une installation d'aspiration traversée par un courant de support chaud, un dispositif selon l'une quelconque des revendications précédentes étant disposé dans l'installation d'aspiration ou au niveau de celle-ci, notamment au niveau d'un tube d'aspiration, conduisant à un courant de support chaud, de l'installation d'aspiration.

15. Moteur à combustion interne selon la revendication 14, **caractérisé en ce que** la vanne papillon (1) est disposée en aval d'un compresseur d'un turbocompresseur de gaz d'échappement du moteur à combustion interne et en amont d'un refroidisseur d'air de charge de l'installation d'aspiration.
